**Europäisches Patentamt**

(19) **European Patent Office**

**Office européen des brevets**

(11) Veröffentlichungsnummer: **0 098 348**

**B1**

(12) **EUROPÄISCHE PATENTSCHRIFT**

(45) Veröffentlichungstag der Patentschrift:
02.09.87

(51) Int. Cl.⁴: **B 23 B 31/10**

(21) Anmeldenummer: **83102716.4**

(22) Anmeldetag: **18.03.83**

(54) **Spannbacke für Drehfutter.**

(30) Priorität: **03.07.82 DE 8219125 U**

(43) Veröffentlichungstag der Anmeldung:
**18.01.84 Patentblatt 84/3**

(45) Bekanntmachung des Hinweises auf die Patenterteilung:
**02.09.87 Patentblatt 87/36**

(84) Benannte Vertragsstaaten:
**AT CH DE FR GB IT LI SE**

(56) Entgegenhaltungen:
**DE-A-2 134 401**
**DE-C-488 387**
**FR-A-907 771**
**GB-A-1 077 459**
**US-A-1 799 019**
**US-A-2 158 490**
**US-A-3 512 794**

(73) Patentinhaber: **Röhm GmbH, Heinrich- Röhm-Strasse 50, D-7927 Sontheim (DE)**

(72) Erfinder: **Röhm, Günter Horst, Franziskastrasse 6, D-7927 Sontheim Brenz (DE)**

(74) Vertreter: **Fay, Hermann, Dipl.- Phys. Dr., Ensingerstrasse 21 Postfach 1767, D-7900 Ulm (Donau) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Spannbacke für ein Drehfutter, bei dem die Spannbacke radial verstellbar geführt ist, mit einer am Spannbackenkörper vorgesehenen, gegen die Futterachse von der Spannseite des Spannbackenkörpers aus entgegengesetzt zur Spannrichtung schräg verlaufenden Abstützfläche und einem der Abstützfläche anliegenden und daran von einer Halteeinrichtung gehaltenen Spanneinsatz, sowie mit einer Anschlagfläche zur spannbackenkörperseitigen Anlage des Spanneinsatzes, wobei der Spanneinatz an der Abstützfläche in Richtung ihres schrägen Verlaufes verschiebbar geführt und zur Anschlagfläche hin gegen ein Federelement abgestützt ist, das den Spanneinsatz im unbelasteten Zustand in freiem Abstand von der Anschlagfläche hält und in einer zur Anschlagfläche hin offenen Ausnehmung des Spanneinsatzes angeordnet ist, aus der es in Richtung zur Anschlagfläche hervorsteht.

Spannbacken dieser Art sind aus der US-A-2 158 490 bzw. US-A-3 512 794 bekannt und besitzen den Vorteil, daß wegen der schräg verlaufenden Abstützfläche am Spanneinsatz beim Spannvorgang eine Niederzugwirkung entsteht, durch die das dem Spanneinatz anliegende Werkstück fest gegen dazu am Drehfutter vorgesehene Anschläge gedrückt und dadurch in seiner Lage exakt festgelegt wird. Bei den bekannten Spannbacken dieser Art ist das Federelement eine Schraubenfeder, die lose in die als zylindrische Sackbohrung ausgebildete Ausnehmung des Spanneinsatzes eingelegt und einenends am Boden der Sackbohrung, andernends an der Anschlagfläche des Spannbackenkörpers abgestützt ist. Daher muß die Bauabmessung des Spanneinsatzes in Richtung der Federachse größer als die Federlänge sein, und die Schraubenfeder kann leicht aus der Sackbohrung herausfallen, wenn der Spanneinsatz ausgewechselt und dabei vom Spannbackenkörper abgenommen wird.

Der Erfindung liegt die Aufgabe zugrunde, bei einer Spannbacke der eingangs genannten Art das Federelement so auszubilden und anzuordnen, daß es in einfacher Weise unverlierbar am Spanneinsatz gehalten ist.

Diese Aufgabe wird nach der Erfindung dadurch gelöst, daß das Federelement als Federhülse mit quer zur Verschiebungsrichtung des Spanneinsatzes liegender Hülsenachse ausgebildet ist, und daß in Bohrungen des Spanneinsatzes beidseits der Federhülse und zu dieser im wesentlichen koaxial Sperrstifte angeordnet sind, deren jeweils kegelförmiges Ende in die Federhülse vorsteht.

Durch die Sperrstifte ist die Federhülse unverlierbar am Spanneinsatz gehalten und kann unschwer hinsichtlich ihres Durchmessers und ihrer elastischen Eigenschaften dem Spanneinsatz angepaßt werden. Dennoch ist die Federhülse radial sowohl beweglich als auch verformbar. Im übrigen ist die Ausbildung des Federelements als Federhülse mit dem Vorteil verbunden, daß die Federabmessung in Richtung des Federwegs klein, nämlich nicht größer als der Durchmesser der Federhülse ist, was in dieser Richtung auch entsprechend kleine Bauabmessungen des Spanneinsatzes ermöglicht. Die Übertragung der Abstützkraft erfolgt über die ganze Länge der Federhülse und kann so optimal auf die Breite des Spanneinsatzes und der Spannbacke abgestimmt werden.

Von Vorteil ist es, wenn der Spanneinsatz den Spannbackenkörper beidseits übergreift und dort außen am Spannbackenkörper zusätzlich geführt ist. Dadurch ist der Spanneinsatz in Richtung der Abstützfläche auch quer zur Spannrichtung geführt.

Die Halteeinrichtung ist zweckmäßigerweise als mit am Spannbackenkörper gehaltene Pratze ausgebildet, die mit einer der Abstützfläche parallelen und dieser zugewandten Gleitfläche dem Spanneinsatz mindestens über die Länge des Verschiebungsweges anliegt und ferner eine zur Gleitfläche im wesentlichen senkrechte Rückhaltefläche aufweist, der sich der Spanneinsatz entgegengesetzt zur Wirkungsrichtung des Federelementes anlegt. Somit wird der Spanneinsatz trotz Verschiebbarkeit längs der Abstützfläche gehalten. Weiter ist es vorteilhaft, wenn die Pratze schmaler als der Spannbackenkörper ist und mittig zu diesem angeordnet iat. Damit verbleibt dem Spanneinsatz eine größere Fläche zur Anlage an der Abstützfläche, so daß eine große Kraftübertragung vom Spannbackenkörper auf den Spanneinsatz möglich ist.

Im folgenden wird die Erfindung an einem in der Zeichnung dargestellten Ausführungsbeispiel näher erläutert; es zeigen:

Fig. 1 eine Seitenansicht der Spannbacke, teilweise im Schnitt dargestellt,

Fig. 2 eine Draufsicht auf die Spannbacke nach Fig. 1,

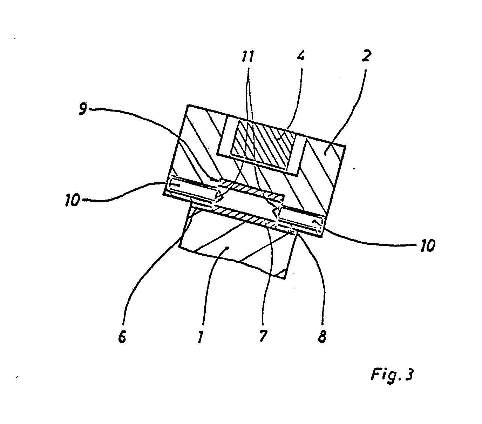

Fig. 3 einen Schnitt durch die Spannbacke längs der Schnittlinie III-III nach Fig. 1.

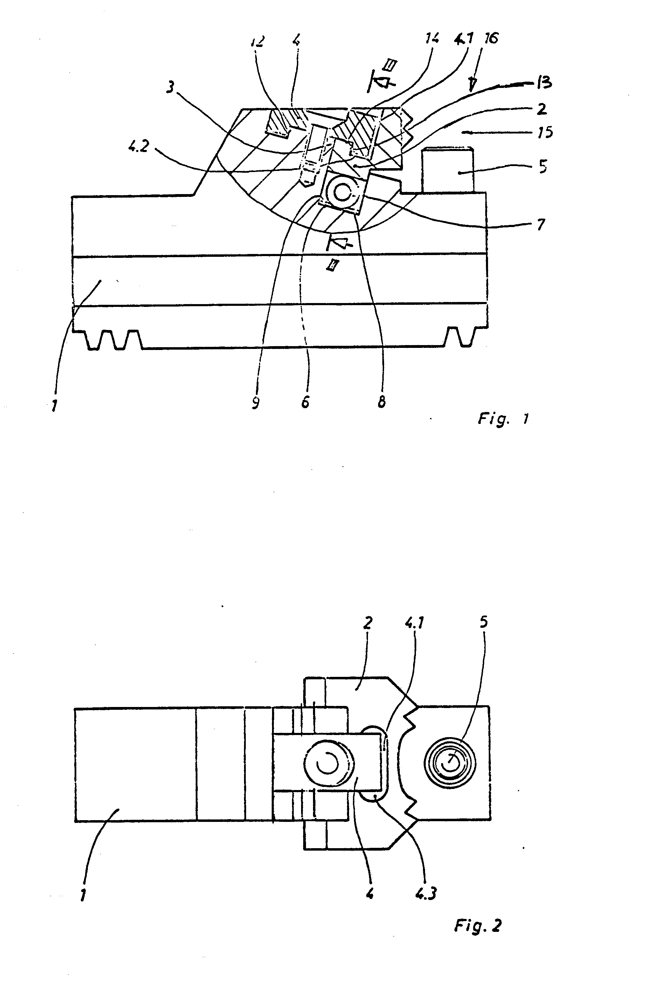

Die Spannbacke besteht nach Fig. 1 der Zeichnung aus einem Spannbackenkörper 1, einem Spanneinsatz 2, der einer schräg verlaufenden Abstützfläche 3 des Spannbackenkörpers 1 formschlüssig anliegt, sowie einer den Spanneinsatz 2 haltenden Halteeinrichtung 4. Ferner ist ein Futteranschlag 5 vorgesehen, der entweder, wie im Ausführungsbeispiel, dem Spannbackenkörper 1 aufgesetzt, jedoch von diesem auch unmittelbar gebildet sein kann. Am Spannbackenkörper 1 ist weiter eine Anschlagfläche 6 für den Spanneinsatz 2 vorgesehen. Der Spanneinsatz 2 ist entlang der Abstützfläche 3 verschiebbar geführt, wobei zwischen der Anschlagfläche 6 und dem Spanneinsatz 2 ein Federelement 7 derart vorgesehen ist, daß der Spanneinsatz 2 im unbelasteten Zustand des Federelements 7 der Anschlagfläche 6 nicht anliegt, so daß zwischen der Anschlagfläche 6 und dem Spanneinsatz 2 ein schmaler Spalt 8 besteht. Dazu ist im Spanneinsatz 2 eine zur Anschlagfläche 6 hin offene Ausnehmung 9 vorgesehen, in die das als Federhülse ausgebildete Federelement 7 eingesetzt ist, wobei die Tiefe der Ausnehmung 9 und der Durchmesser der Federhülse so aufeinander abgestimmt sind, daß das Federelement 7 geringfügig über die Berandung der Ausnehmung 9 hervorsteht. Die Federhülse ist in der Ausnehmung 9 durch zwei Sperrstifte 10 gehalten, die in Bohrungen des Spanneinsatzes 2 beidseits der Federhülse angeordnet sind, wobei das jeweils kegelförmige Ende 11 der Sperrstifte 10 in die Bohrung der Hülse vorsteht. Der Spanneinsatz 2 übergreift beidseits den Spannbackenkörper 1, wodurch eine seitliche Führung für den Spanneinsatz 2 geschaffen wird.

Die Halteeinrichtung 4 ist als mit dem Spannbackenkörper 1 verschraubte Pratze ausgebildet, wobei deren eines Ende 12 formschlüssig in eine Ausnehmung im Spannbackenkörper 1 greift. Das andere Ende der Pratze ist mit einer der Abstützfläche 3 parallelen und dieser zugewandten Gleitfläche 13 versehen, die dem Spanneinsatz 2 formschlüssig anliegt und ebenfalls der Führung des Spanneinsatzes 2 dient. Ferner weist die Pratze eine zur Gleitfläche 13 im wesentlichen senkrechte Rückhaltefläche 14 auf, der der Spanneinsatz 2 bei entspanntem Federelement 7 anliegt. Im übrigen greift die Pratze bei 4.1, 4.2 und 4.3 mit freiem Abstand in den Spanneinsatz 2, so daß die Führungseigenschaften nicht beeinträchtigt werden und die Kraftübertragung vom Spanneinsatz 2 auf den Spannbackenkörper im wesentlichen nur über die Abstützfläche 3 erfolgt.

Beim Spannvorgang eines in der Zeichnung nicht dargestellten Werkstückes wirkt auf den Spanneinsatz 2 eine Kraft in Richtung des Pfeiles 15 mit der Folge, daß der Spanneinsatz 2 gegen die Kraft des Federelementes in Richtung des Pfeiles 16 verschoben wird, bis der Spanneinsatz 2 der Anschlagfläche 6 anliegt. Dieser sogenannte Niederzugweg, der im einzelnen dem zu spannenden Werkstück und dem jeweiligen Spanneinsatz 2 angepaßt sein kann, liegt etwa in der Größenordnung von 0,1 mm. Die Verschiebung des Spanneinsatzes 2 in Richtung des Pfeiles 16 hat eine Verschiebung des zu spannenden Werkstückes gegen den Futteranschlag 5 zur Folge, so daß durch Verformungen im Futterkörper, in den Spannbacken oder den Spanneinsätzen 2 sonst u. U. verursachte Abhebungen des Werkstückes von den Futteranschlägen 5 vermieden werden.

## Patentansprüche

1. Spannbacke für ein Drehfutter, bei dem die Spannbacke radial verstellbar geführt ist, mit einer am Spannbackenkörper (1) vorgesehenen, gegen die Futterachse von der Spannseite des Spannbackenkörpers (1) aus entgegengesetzt zur Spannrichtung schräg verlaufenden Abstützfläche (3) und einem der Abstützfläche (3) anliegenden und daran von einer Halteeinrichtung (4) gehaltenen Spanneinsatz (2), sowie mit einer Anschlagfläche (6) zur spannbackenkörperseitigen Anlage des Spanneinsatzes (2), wobei der Spanneinsatz (2) an der Abstützfläche (3) in Richtung ihres schrägen Verlaufes verschiebbar geführt und zur Anschlagfläche (6) hin gegen ein Federelement (7) abgestützt ist, das den Spanneinsatz (2) im unbelasteten Zustand in freiem Abstand von der Anschlagfläche (6) hält und in einer zur Anschlagfläche (6) hin offenen Ausnehmung (9) des Spanneinsatzes (2) angeordnet ist, aus der es in Richtung zur Anschlagfläche hervorsteht, dadurch gekennzeichnet, daß das Federelement (7) als Federhülse mit quer zur Verschiebungsrichtung des Spanneinsatzes liegender Hülsenachse ausgebildet ist, und daß in Bohrungen des Spanneinsatzes (2) beidseits der Federhülse und zu dieser im wesentlichen koaxial Sperrstifte (10) angeordnet sind, deren jeweils kegelförmiges Ende (11) in die Federhülse vorsteht.

2. Spannbacke nach Anspruch 1, dadurch gekennzeichnet, daß der Spanneinsatz (2) den Spannbackenkörper (1) beidseits übergreift und dort außen am Spannbackenkörper zusätzlich geführt ist.

3. Spannbacke nach Anspruch 1 oder 2, dadurch gekennzeichnet, daß die Halteeinrichtung (4) als am Spannbackenkörper (1) gehaltene Pratze ausgebildet ist, die mit einer der Abstützfläche (3) parallelen und dieser zugewandten Gleitfläche (13) dem Spanneinsatz (2) mindestens über die Länge des Verschiebungsweges anliegt und ferner eine zur Gleitfläche (13) im wesentlichen senkrechte Rückhaltefläche (14) aufweist, der sich der Spanneinsatz (2) entgegengesetzt zur Wirkungsrichtung des Federelementes anlegt.

4. Spannbacke nach Anspruch 3, dadurch gekennzeichnet, daß die Pratze schmaler als der Spannbackenkörper (1) ist und mittig zu diesem angeordnet ist.

## Claims

1. A clamping jaw for a rotary chuck in which the clamping jaw is radially displaceably guided, comprising a support surface (3) which is provided on the clamping jaw body (1) and which extends inclinedly relative to the axis of the chuck from the clamping side of the clamping jaw body (1) in the opposite direction to the clamping direction, and a clamping insert (2) which bears against the support surface (3) and which is held thereat by a holding means (4), and an abutment surface (6) for contact with the clamping insert (2), at the clamping chuck body side, wherein the clamping insert (2) is guided on the support surface (3) displaceably in the direction in which it inclinedly extends and is supported towards the abutment surface (6) against a spring element (7) which holds the clamping insert (2) in the unloaded condition at a free spacing from the abutment surface (6) and which is arranged in a recess (9) in the clamping insert (2), which is open towards the abutment surface (6) and from which it projects in the direction towards the abutment surface, characterised in that the spring element (7) is in the form of a spring sleeve with the sleeve axis disposed transversely with respect to the direction of displacement of the clamping insert, and that arranged in bores in the clamping insert (2) on both sides of the spring sleeve and in substantially coaxial relationship therewith are locking pins (10) whose respective tapering ends (11) project into the spring sleeve.

2. A clamping jaw according to claim 1 characterised in that the clamping insert (2) engages over the clamping jaw body (1) on both sides thereof and is additionally guided there on the clamping jaw body on the outside thereof.

3. A clamping jaw according to claim 1 or claim 2 characterised in that the holding means (4) is in the form of a claw which is mounted to the clamping jaw body (1) and which bears against the clamping insert (2) at least over the length of the displacement travel, with a sliding surface (13) which is parallel to the support surface (3) and which faces towards same, and also has a retaining surface (14) which is substantially perpendicular with respect to the sliding surface (13) and against which the clamping insert (2) bears in opposite relationship to the direction in which the spring element acts.

4. A clamping jaw according to claim 3 characterised in that the claw is narrower than the clamping jaw body (1) and is arranged centrally with respect thereto.

**Revendications**

1. Mors pour mandrin dans lequel le mors est guidé de façon à pouvoir être déplacé radialement, avec une surface d'appui (3) prévue sur le corps du mors (1), qui s'étend en oblique par rapport à l'axe du mandrin, dans le sens opposé à la direction de serrage vu du côté serrage du corps du mors (1), avec un insert de serrage (2) en contact avec la surface d'appui (3) et maintenu en position par un dispositif de retenue (4), ainsi qu'avec une surface d'arrêt (6) pour le blocage de l'insert de serrage (2) du côté du corps du mors, l'insert de serrage (2) étant guidé sur la surface d'appui (3) de façon à pouvoir être déplacé dans le sens de son extension oblique et s'appuyant, en direction de la surface d'arrêt (6), sur un organe élastique (7) lequel maintient l'insert de serrage (2), à l'état non chargé, à distance libre de la surface d'arrêt (6) et qui est disposé dans un évidement (9) de l'insert de serrage (2) ouvert en direction de la surface d'arrêt (6) duquel il dépasse en direction de la surface d'arrêt (6), caractérisé par le fait que l'organe élastique (7) est conformé en douille de ressort dont l'axe est orienté transversalement à la direction de déplacement de l'insert de serrage, et que des axes de blocage (10) sont placés dans des alésages de l'insert de serrage (2) de part et d'autre de la douille de ressort et essentiellement coaxialement à celle-ci, l'extrémité conique (11) desdits axes de blocage dépassant respectivement dans la douille de ressort.

2. Mors selon la revendication 1, caractérisé par le fait que l'insert de serrage (2) recouvre le corps du mors (1) des deux côtés et qu'il est guidé, en plus, à l'extérieur du corps du mors.

3. Mors selon l'une des revendications 1 ou 2, caractérisé par le fait que le dispositif de retenue (4) est conformé en griffe maintenue sur le corps du mors (1) laquelle est appliquée avec une surface de glissement (13) parallèle à la surface d'appui (3) et dirigée vers celle-ci contre l'insert de serrage (2) sur au moins la longueur du parcours de déplacement, et présente, en plus, une surface de retenue (14) essentiellement perpendiculaire à la surface de glissement (13) contre laquelle vient buter l'insert de serrage (2) en sens inverse de la direction d'action de l'organe élastique.

4. Mors selon la revendication 3, caractérisé par le fait que la griffe est plus étroite que le corps du mors (1) et qu'elle est centrée par rapport à celui-ci.

0 098 348

Fig. 1

Fig. 2

1

Fig. 3